# EUROPEAN PATENT APPLICATION

(11) **EP 2 431 840 A1**
(43) Date of publication of application: **21.03.2012**
(21) Application number: 10177057.6
(22) Date of filing: 16.09.2010
(51) Int. Cl.: G06F 3/01, G06F 3/033

(54) **Electronic device with touch-sensitive display**

(71) Applicant: Research In Motion Limited, Waterloo, ON N2L 3W8 (CA)
(72) Inventor: Kontio, Risto Tuomas, Waterloo Ontario N2L 5R9 (CA)
(74) Representative: Phillips, Emily Elizabeth

(57) **Abstract**

An electronic device includes a touch-sensitive display, a plurality of fluid elements arranged and constructed to transfer a force to the touch-sensitive display to provide tactile feedback, and an actuator coupled to the plurality of fluid elements to apply the force through the fluid elements when the actuator is actuated.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 702.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. Improvements in devices with touch-sensitive displays are desirable.

### SUMMARY

An electronic device includes a touch-sensitive display, a plurality of fluid elements arranged and constructed to transfer a force to the touch-sensitive display to provide tactile feedback, and an actuator coupled to the fluid elements to apply the force through the fluid elements when the actuator is actuated. An electronic device includes a touch-sensitive display including a rigid cover, a plurality of fluid elements arranged and constructed to transfer a force to the cover to provide tactile feedback, and an actuator coupled to the plurality of fluid elements to apply the force through the fluid elements when the actuator is actuated.

### BRIEF DESCRIPTION OF THE DRAWINGS

FIG. 1 is a block diagram of a portable electronic device in accordance with the present disclosure.

FIG. 2 is a sectional side view of an example of a portable electronic device with an actuator coupled to fluid elements in accordance with the disclosure.

FIG. 3 is a top view of the portable electronic device with fluid elements in accordance with the disclosure.

FIG. 4 is a sectional side view of a piezoelectric actuator in accordance with the disclosure.

FIG. 5 is a sectional side view of another example of a portable electronic device with an actuator coupled to fluid elements in accordance with the disclosure.

FIG. 6 is top view of the portable electronic device of FIG. 5 illustrating fluid elements in accordance with the disclosure.

### DETAILED DESCRIPTION

The following describes an electronic device that includes a touch-sensitive display, a plurality of fluid elements arranged and constructed to transfer a force to the touch-sensitive display to provide tactile feedback, and an actuator coupled to the fluid elements to apply the force through the fluid elements when the actuator is actuated.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

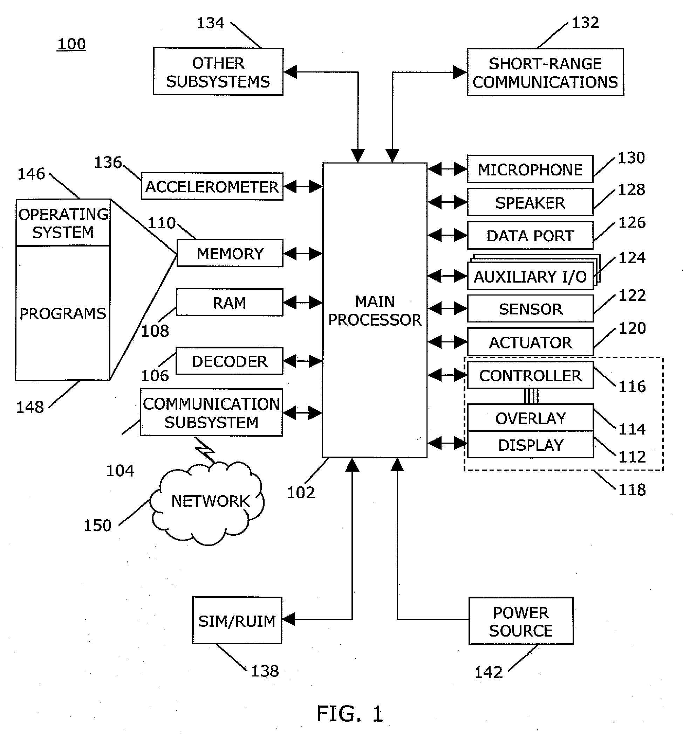

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces. Optionally, the processor 102 may interact with one or more force or pressure sensors 122.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 receives touch data, including a location of a touch. Touch data may include an area of contact or a single point of contact, such as a point at or near a center of the area of contact. A signal is provided to the controller 116 in response to detection of a touch. A touch may be detected from any suitable object, such as a finger, thumb or appendage. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to a finishing point. A gesture may be long or short in distance and/or duration. Two points of the gesture may be utilized to determine a direction of the gesture.

The touch-sensitive display 118 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

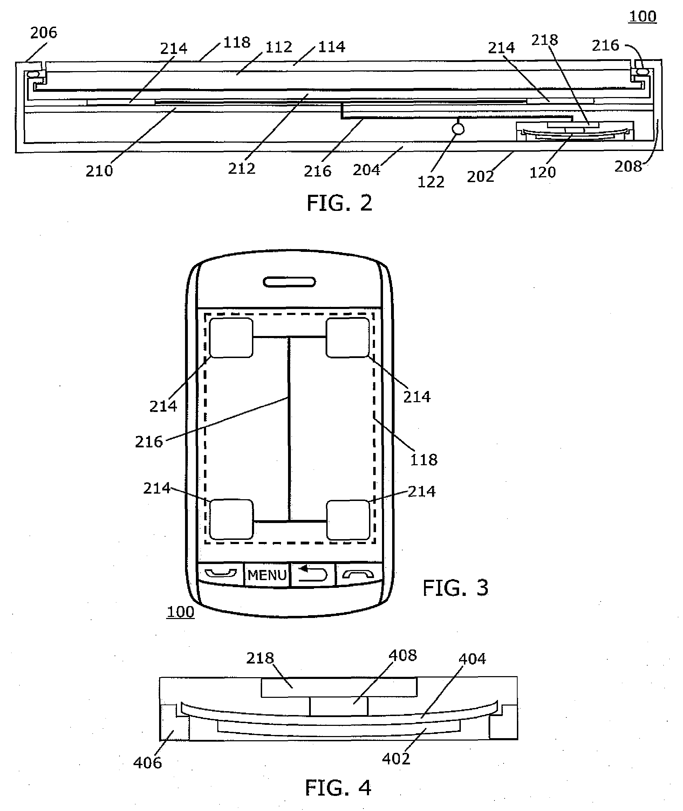

A cross section of a portable electronic device 100 taken through a center of a piezoelectric ("piezo") actuators 120 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The touch-sensitive display 118 is moveable and depressible with respect to the housing 202. A force applied to the touch-sensitive display 118 moves, or depresses, the touch-sensitive display 118 toward the base 210.

Hydraulic or pneumatic elements, referred to herein as fluid elements 214 are disposed between the base 210 and the support tray 212. The term fluid, as used herein, may refer to a liquid in a hydraulic system or a gas in a pneumatic system. The fluid elements 214 may be, for example, hydraulic or pneumatic bags or pads. At least one side of the elements is elastically deformable such that an increase in fluid pressure in the fluid elements 214 causes expansion of the fluid elements 214 in at least one direction to apply a force to the touch-sensitive display 118 in a direction away from the base 210.

Optionally, expansion of the sides of the fluid elements 214 may be inhibited or constrained to facilitate application of force in a direction toward the touch-sensitive display 118. Expansion of the sides of the fluid elements may be inhibited or constrained, for example, utilizing thicker walls to inhibit expansion of the sides, and, relatively thinner walls adjacent to the base 210 and/or the support tray 212 to facilitate elastic deformation to apply force to the touch-sensitive display 118, in the direction away from the base 210. Alternatively, the fluid elements 214 may be comprised of more than one material such that the walls of the fluid elements 214 adjacent the base 210 and/or the support tray 212 are more elastically deformable that the remaining walls.

Expansion of the sides of the fluid elements 214 may also be inhibited or constrained, for example, by additional sidewalls that extend around the sides of each of the fluid elements 214 to provide a pocket in which the fluid elements 214 are disposed and to inhibit expansion in a direction perpendicular to the direction of movement of the touch-sensitive display 118. Such sidewalls may facilitate movement of the touch-sensitive display 118 in the direction of the base 210 while inhibiting expansion of the fluid elements 214. For example, the sidewalls may comprise foam or other compressible material. Alternatively, the sidewalls may comprise, for example, metal or plastic that extends between the base 210 and the support tray 212.

The fluid elements 214 are each coupled to the actuator 120 by a fluid line 216, which may be a hydraulic line or a pneumatic line. The fluid line 216 interconnects the fluid elements 214 and a fluid reservoir 218. The fluid reservoir 218 may be any suitable fluid container to which a force may be applied to increase pressure in the fluid reservoir 218 and in the fluid line 216. For example, the fluid reservoir may be a fluid-filled bladder against which the actuator 120 may apply a force utilizing, for example, a plunger.

A top view of an example of the portable electronic device 100 is shown in FIG. 3 with the touch-sensitive display 118 removed. The touch-sensitive display 118 is illustrated with a dotted line as a location reference. In the example illustrated in FIG. 3, four fluid elements 214 are shown with an element located near each corner of the touch-sensitive display 118.

A cross section taken through the center of a piezo actuator 120 is shown in FIG. 4. The actuator 120 may comprise one or more piezo devices or elements 402. The piezo actuator 120 is shown disposed between the back 204 and the base 210. The piezo actuator 120 includes a piezo element 402, such as a piezoelectric ceramic disk, fastened to a substrate 404, for example, by adhesive, lamination, laser welding, and/or by other suitable fastening method or device. The piezoelectric material may be lead zirconate titanate or any other suitable material. Although the piezo element 402 is a ceramic disk in this example, the piezo element may have any suitable shape and geometrical features, for example, a non-constant thickness, or other shape.

The substrate 404, which may also be referred to as a shim, may be comprised of a metal, such as nickel, or any other suitable material such as, for example, stainless steel, brass, and so forth. The substrate 404 bends when the piezo element 402 contracts diametrically due to charge/voltage across the piezo element 402.

The substrate 404 and piezo element 402 may be suspended or disposed on a support 406 such as a ring-shaped frame for supporting the piezo element 402 while permitting flexing of the piezo actuator 120. The supports 406 may be disposed on the back 204 or may be part of or integrated with the back 204.

A pad 408 may be disposed between the piezo actuator 120 and the fluid reservoir 218. The pad 408 in the present example is a compressible element such as a hard rubber, silicone, polyester, and/or other materials. The pad 408 is advantageously resilient and is aligned with the fluid reservoir 218 to act, e.g., as a plunger, to facilitate the transfer of force from the actuator 120 to the fluid reservoir 218 and increase the pressure of fluid in the fluid reservoir 218.

The pressure sensor 122 may be coupled to the fluid line 216 to measure pressure of the fluid in the fluid line 216. Pressure in the fluid line 216 may increase when a force is imparted on the touch-sensitive display 118 by, for example, a touch on the touch-sensitive display. Pressure in the fluid line 216 may also increase when the actuator 120 is actuated. The pressure sensor 122 may provide pressure or force information related to a detected touch. The force information may be utilized to select information, such as information associated with a location of a touch.

The pressure sensor 122 may be electrically coupled to the processor 102 or to a separate controller that is electrically coupled to the processor 102. A change in pressure in the fluid line 216 may be determined via the processor 102 or by the controller and a value representative of the pressure in the fluid line 216 or force imparted to the touch-sensitive display 118 may be determined utilizing the pressure sensor 122.

Pressure or force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The actuator 120 may be electrically coupled to a piezo driver that communicates with the processor 102 or to the separate controller in communication with the processor 102. The piezo actuator 120 and the pressure sensor 122 are operatively coupled to the main processor 102. The processor 102, or the controller, controls the piezo driver that controls the current/voltage to the piezo element 402 of the actuator 120. Thus, the processor 102 and/or the controller controls the force applied by the piezo actuator 120 to the fluid reservoir 218, and controls the pressure in the fluid reservoir 218.

When the actuator 120 is actuated, a force is applied to the fluid reservoir 218 and the pressure in the fluid line 216 and in the fluid elements 214 increases and causes expansion of the fluid elements 214. A force is applied, by expansion of the fluid elements 214, to the touch-sensitive display 118. When the actuation is discontinued, the force to the touch-sensitive display 118 is reduced.

The tactile feeling of switches, actuators, keys, other physical objects, and so forth may be simulated, or a non-simulated tactile feedback may be provided by controlling the piezo element 402 to control the pressure in the fluid elements 214. For example, when a force imparted on the touch-sensitive display 118, which force is measured utilizing the pressure sensor 122, exceeds a depression threshold, the voltage/charge at the piezo actuator 120 is modified such that the piezo actuator 120 imparts a force to the fluid reservoir 218. The force to the fluid reservoir 218 increases the pressure in the fluid elements 214 to apply a force to the touch-sensitive display 118. The force applied to the touch-sensitive display 118 may, for example, simulate depression of a dome switch. When the force imparted on the touch-sensitive display 118 falls below a release threshold, the voltage/charge at the piezo actuator 120 is modified such that the piezo actuator 120 discontinues imparting or reduces the force applied to the fluid reservoir 218. Discontinuing or reducing the force applied to the fluid reservoir discontinues or reduces the force applied by the fluid elements 214 to the touch-sensitive display 118, which may, for example, simulate release of a dome switch.

In the example described above, the four fluid elements 214 are in fluid communication with a single actuator 120. Alternatively, the fluid elements 214 may be in fluid communication with more than one actuator. For example, a plurality of actuators may be utilized and each actuator may control the pressure in a pair of fluid elements or each actuator may be utilized to control the pressure in a respective fluid element.

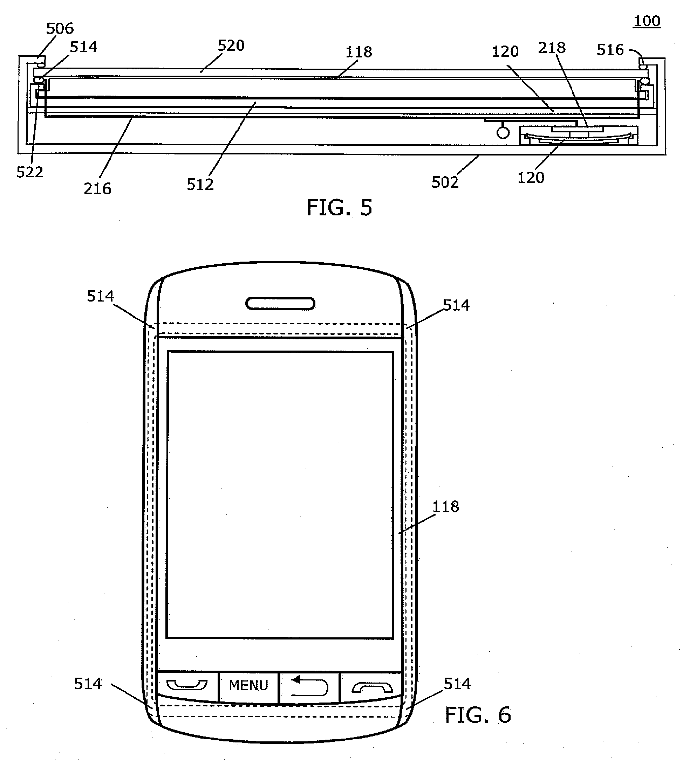

A cross section taken through the center of a piezo actuator 120 of another example of a portable electronic device is illustrated in FIG. 5 and a top view of the portable electronic device is illustrated in FIG. 6. Many of the features of the portable electronic device may be similar to those described with reference to FIG. 1 through FIG. 4 and are therefore not described again in detail. In the example shown in FIG. 5 and FIG. 6, the fluid elements 514 are disposed between a cover 520 of the touch-sensitive display 118 and a lip 522 of the support tray 512. The fluid elements 514 may be, for example, a flexible tube, or other conduit, that extends around the lip 522. The flexible tube extends around a margin of the cover 520, under a frame 506 of the housing 502. Although not visible in the top view, the fluid elements 514 are shown in dashed line in FIG. 6 as reference. Alternatively, the fluid elements may be segments of flexible tube that are distributed around the margin of the cover 520 and joined by generally rigid or less flexible segments. The flexible segments may include tubing with sidewalls that are thinner than the remainder of the tube to facilitate elastic deformation or may be comprised of a different, elastically deformable material. Resilient spacers 516 may be disposed between the cover 520 and the frame 506.

The fluid elements 514 are coupled to the actuator 120 utilizing a fluid line 216 that is in fluid communication with the tubing and with the fluid reservoir 218.

When the actuator 120 is actuated, a force is applied to the fluid reservoir 218 and the pressure in the fluid line 216 and in the fluid elements 514 increases and causes expansion of the fluid elements 514 to apply a force to the touch-sensitive display 118. When the actuation is discontinued, the force to the touch-sensitive display 118 is reduced.

The touch-sensitive display 118 may move within the housing to depress the hydraulic elements 214. The hydraulic elements 214 may be coupled to an actuator 120 to increase the pressure in the hydraulic elements 214 and apply a force to the touch-sensitive display 118. Multiple fluid elements may be utilized to apply force to the touch-sensitive display 118 at multiple locations utilizing a single actuator. The force may be applied to the touch-sensitive display 118 as a whole or to a cover of the touch-sensitive display to provide tactile feedback. The tactile feedback may be controlled by controlling the actuator 120.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. An electronic device comprising:
a touch-sensitive display;
a plurality of fluid elements arranged and constructed to transfer a force to the touch-sensitive display and to provide tactile feedback;
an actuator coupled to the plurality of fluid elements to apply the force through the fluid elements when the actuator is actuated.

2. The electronic device according to claim 1, wherein the plurality of fluid elements are disposed between a back of the electronic device and the touch-sensitive display to transfer the force to the touch-sensitive display.

3. The electronic device according to claim 1, wherein the plurality of fluid elements are disposed adjacent a support tray of the touch-sensitive display.

4. The electronic device according to claim 1, wherein the plurality of fluid elements comprise a plurality of fluid pads.

5. The electronic device according to claim 1, wherein the fluid elements comprise one of hydraulic and pneumatic pads.

6. The electronic device according to claim 1, wherein the fluid elements are distributed to transfer the force to the touch-sensitive display at a plurality of locations.

7. The electronic device according to claim 1, wherein the fluid elements are disposed to transfer the force and cause movement of the touch-sensitive display away from a base of the electronic device.

8. The electronic device according to claim 1, comprising a pressure sensor arranged to detect at least one of a force imparted on the touch-sensitive display and a pressure in a fluid line to the actuator.

9. The electronic device according to claim 1, wherein the actuator is actuated in response to determination that a force imparted on the touch-sensitive display exceeds a threshold value.

10. An electronic device according to claim 1, wherein touch-sensitive display includes a rigid cover.

11. The electronic device according to claim 10, comprising a housing, wherein the plurality of fluid elements are disposed between a housing and the cover.

12. The electronic device according to claim any one of claims 1 to 11, wherein the actuator is coupled to the plurality of fluid elements by a fluid line.

13. The electronic device according to claim 1 or claim 10 , wherein the plurality of fluid elements comprise flexible tubing in a fluid line.

14. The electronic device according to any one of claims 1 to 13, wherein the actuator comprises a piezo actuator.

15. The electronic device according to any one of claims 1 to 14, wherein the actuator comprises a piezo actuator arranged to apply the force to a fluid reservoir in fluid communication with the fluid elements.

## Amended claims

### Amended claims in accordance with Rule 137(2) EPC.

**1.** An electronic device (100) comprising:
a touch-sensitive display (118);
a plurality of fluid elements (214) arranged and constructed to transfer a force to the touch-sensitive display (118) and to provide tactile feedback;
an actuator (120) coupled to the plurality of fluid elements (214) to apply the force through the fluid elements (214) when the actuator (120) is actuated;
a pressure sensor (122) configured to detect a pressure in a fluid line (216) to the plurality of fluid elements (214), which pressure is related to a detected touch;
wherein the device is configured to select information associated with a location of the touch based on the detected pressure.

**2.** The electronic device (100) according to claim 1, wherein the plurality of fluid elements (214) are disposed between a back of the electronic device (100) and the touch-sensitive display (118) to transfer the force to the touch-sensitive display (118).

**3.** The electronic device according to claim 1, wherein the plurality of fluid elements (214) are disposed adjacent a support tray (512) of the touch-sensitive display (118).

**4.** The electronic device (100) according to claim 1, wherein the plurality of fluid elements (214) comprise a plurality of fluid pads.

**5.** The electronic device according to claim 1, wherein the fluid elements (214) comprise one of hydraulic and pneumatic pads.

**6.** The electronic device (100) according to claim 1, wherein the fluid elements (214) are distributed to transfer the force to the touch-sensitive display (118) at a plurality of locations.

**7.** The electronic device (100) according to claim 1, wherein the fluid elements (214) are disposed to transfer the force and cause movement of the touch-sensitive display (118) away from a base (210) of the electronic device (100).

**8.** The electronic device (100) according to claim 1, wherein the actuator (120) is actuated in response to determination that the force imparted on the touch-sensitive display (100) exceeds the threshold value.

**9.** An electronic device (100) comprising:
a touch-sensitive display (118) including a rigid cover (520);
a plurality of fluid elements (214) arranged and constructed to transfer a force to the cover (520) and to provide tactile feedback;
an actuator (120) coupled to the plurality of fluid elements (214) to apply the force through the fluid elements (214) when the actuator (120) is actuated;
a pressure sensor (122) configured to detect a pressure in a fluid line (216) to the plurality of fluid elements (214), which pressure is related to a detected touch;
wherein the device is configured to select information associated with a location of the touch based on the detected pressure.

**10.** The electronic device (100) according to claim 9, comprising a housing, wherein the plurality of fluid elements (214) are disposed between a housing (202) and the cover (520).

**11.** The electronic device (100) according to claim any one of claims 1 to 10, wherein the actuator (120) is coupled to the plurality of fluid elements (214) by the fluid line (512).

**12.** The electronic device (100) according to claim 1 or claim 9, wherein the plurality of fluid elements (214) comprise flexible tubing in the fluid line (512).

**13.** The electronic device (100) according to any one of claims 1 to 12, wherein the actuator (120) comprises a piezo actuator.

**14.** The electronic device (100) according to any one of claims 1 to 13, wherein the actuator (120) comprises a piezo actuator arranged to apply the force to a fluid reservoir (218) in fluid communication with the fluid elements (214).
